Europäisches Patentamt

European Patent Office

Office européen des brevets

(19)

(11) Veröffentlichungsnummer: **0 026 488**
**B1**

(12)     **EUROPÄISCHE PATENTSCHRIFT**

(45) Veröffentlichungstag der Patentschrift: **18.01.84**

(51) Int. Cl.³: **F 16 N 7/32,** F 16 N 7/00

(21) Anmeldenummer: **80105845.4**

(22) Anmeldetag: **26.09.80**

(54) **Verfahren zur Ölschmierung und Vorrichtung zur Durchführung des Verfahrens.**

(30) Priorität: **29.09.79 DE 2939604**

(43) Veröffentlichungstag der Anmeldung:
**08.04.81 Patentblatt 81/14**

(45) Bekanntmachung des Hinweises auf die Patenterteilung:
**18.01.84 Patentblatt 84/3**

(84) Benannte Vertragsstaaten:
**CH DE FR GB IT LI SE**

(56) Entgegenhaltungen:
**DE - A - 2 158 998**
**DE - A - 2 415 016**
**FR - A - 2 324 937**
**GB - A - 1 141 371**
**GB - A - 1 204 607**
**US - A - 2 457 813**

(73) Patentinhaber: **b a r m a g Barmer Maschinenfabrik**
**Aktiengesellschaft**
**Leverkuser Strasse 65 Postfach 110 240**
**D-5630 Remscheid 11 (DE)**

(72) Erfinder: **Bremer, Hermann**
**Erdelenstrasse 9**
**D-5630 Remscheid (DE)**

Courier Press, Leamington Spa, England.

Verfahren zur Ölschmierung und Vorrichtung zur Durchführung des Verfahrens

Die Erfindung betrifft ein Verfahren zur intermittierenden Versorgung von Schmierstellen mit Schmieröl nach dem Oberbegriff des Anspruchs 1 sowie eine Vorrichtung zur Durchführung des Verfahrens nach dem Oberbegriff des Anspruchs 7.

Schmierstellen sind im Rahmen dieser Anmeldung z.B. alle Arten von Gleit- und Wälzlagern, von Lagern für Maschinenteile, die sich drehend oder geradlinig relativ zueinander bewegen.

Bei der "Ölnebel-Schmierung" wird der Schmierstoff Öl durch Druckluft zerstäubt und die Mikrotröpfchen mit der Luft über eine Zuführleitung an die Schmierstelle(n) herangeführt. Dabei sollen den einzelnen Schmierstellen kleine, möglichst genau dosierte Schmierölmengen kontinuierlich bzw. intervallartig zugeführt werden. Bei der zentralen Versorgung von Schmierstellen über ein pneumatisches Verteilersystem ist es nicht zu vermeiden, daß sich Schmieröl aus dem in der Luft befindlichen Kernölstrom während des Transports auch an den Rohrwandungen des Leitungssystems abscheidet und dort einen Schmierölfilm bildet. Andererseits kann sich unter bestimmten Voraussetzungen Schmieröl aus dem Wandölstrom lösen und den Kernölstrom in unerwünschter Weise beeinflussen. Es wird gewünscht, daß das im Ölnebel enthaltene Schmieröl an den Wandungen der Leitungen nicht ausfällt. Um dies zu erreichen, werden bestimmte Strömungsgeschwindigkeiten und Druckverhältnisse in den Leitungen aufrechterhalten. Aber auch bei Einhaltung dieser Bedingungen ist es nicht ganz auszuschließen, daß sich an den Rohrwänden Schmierölfilme bilden. Darüber hinaus besteht die Schwierigkeit, daß Lager für hohe Drehzahlen, bzw. hohe Relativgeschwindigkeiten nur schwierig mit einer Ölnebelschmierung geschmiert werden können, da ein schnellaufendes Lager um sich herum eine Sperrschicht bildet, in die die Mikrotröpfchen des Ölnebels nicht ohne weiteres eindringen können. Diese Sperrschicht um ein schnellaufendes Lager kann von dem Ölnebel nur dann durchdrungen werden, wenn entsprechend hohe Strömungsgeschwindigkeiten und Drücke in der Zuführleitung für den Ölnebel, z.B. durch Anordnung einer Düse vor dem Lager, eingehalten werden. Der Ölnebel wird in der Düse jedoch derart beschleunigt, daß der Impulsbetrieb zu einer Tröpfchenanlagerung und zu einer Abscheidung von Schmieröl aus dem Druckluftstrom führt. Der Abscheidungsgrad steigt mit der erzielbaren Geschwindigkeit, da die Aufprallenergie der Tröpfchen die Anlagerung begünstigt und die Pufferwirkung der zwischen den Mikrotröpfchen befindlichen Luft durch die Umsetzung von statischem in dynamischen Druck vermindert wird. Bei den bekannten Ölnebelschmierungen sind die zu wählenden Geschwindigkeiten und Drücke in der Zuführleitung vor der Düse demzufolge in ihren Höchstwerten begrenzt, so daß die Energie der Mikrotröpfchen im Ölnebel nicht ausreicht, um die vor einem schnellaufenden Lager befindliche Sperrschicht zu durchdringen und ins Lager einzudringen.

Aus der DE—A—22 25 619 ist eine Ölnebelschmierung für schnellaufende Lager bekannt, bei der Olnebel durch eine im Bereich des Lagers angeordnete Düse zugeführt wird, wobei an der der Ölzuführung anbekehrten Seite des Lagers eine Ablaufbohrung angeschlossen ist, die in eine Bohrung einer Druckluftleitung mündet, in der durch Injektorwirkung ein Unterdruck erzeugt wird. Bei der bekannten Ölnebelschmierung erfolgt der Druckabfall zwischen dem Druck des zugeführten Ölnebels und der Druckluft einerseits und dem erzeugten Unterdruck andererseits im Lager.

Der Nachteil dieser bekannten Ölnebelschmierung für schnellaufende Lager liegt darin, daß die Anordnung einer gesonderten Druckluftleitung bis hinter das Lager zur Erzeugung der Unterdrucks relativ aufwendig und die kontinuierliche Unterdruckerzeugung kostspielig ist.

Daneben ist beispielsweise durch die DE—A—21 58 998 eine Sprühölschmierung für schnellaufende Lager bekannt, bei der das Schmieröl und die Druckluft in getrennten Leitungen in den Bereich bis vor die Schmierstelle geführt und das Schmieröl unmittelbar vor dem Lager durch Druckluft intermittierend versprüht und mit hoher Geschwindigkeit auf die Schmierstelle gespritzt wird. Zwischen den Schmierintervallen ist die Ölzufuhr angesperrt und die Lagerstelle wird durch die Druckluft gekühlt.

Der bauliche Aufwand für die separaten Zuführungen für das Schmieröl und die Druckluft zu jeder Lagerstelle ist bei diesem bekannten Verfahren sehr hoch. Außerdem muß zur Vermeidung einer Verschmutzung des Lagers ständig Druckluft verwandt werden, die durch eine besondere Aufbereitung staubfrei ist. Hierdurch entstehen zusätzlich hohe Betriebskosten.

Weiterhin ist aus der GB—A—11 41 371 eine Sprühölschmierung bekannt, bei der Druckluft intermittierend durch eine Venturidüse entspannt wird und dabei Schmieröl durch den erzeugten Unterdruck aus einem Schmierölvorrat ansaugt, fein verteilt mitreißt und auf die Schmierstelle sprüht.

Schließlich ist durch die US—A—24 57 813 ein Verfahren zur intermittierenden Versorgung von Schmierstellen mit Schmieröl bekannt, bei dem zwischen einer Schmierstelle und einem Raum, in dem sich ein mit Schmieröl getränkter Docht befindet, durch die Erzeugung von starken impulsartigen Druckänderungen, Schmieröl an die Schmierstelle gefördert werden soll. Dieses System ist für eine zentrale Schmierölversorgung mehrerer Schmierstellen, insbesondere entfernter liegender Schmierstellen nicht geeignet. Schnellaufende Lager können mit der bekannten Schmiereinrichtung nicht mit Schmieröl versorgt werden, weil das Schmieröl die das Lager umgebende Sperrschicht nicht durchdringen und an die Lagerstelle selbst gelangen kann.

Aufgabe der Erfindung ist daher, ein Verfahren zur Versorgung von Schmierstellen mit Schmieröl, insbesondere von Lagern, anzugeben, das einfach und wirkungsvoll durchgeführt werden kann, ohne daß dazu hohe Förderdrücke bzw. ein großer baulicher Aufwand — wie beispielsweise gesonderte Unterdrucksysteme hinter der Lagerstelle — benötigt werden.

Die Aufgabe wird gelöst durch ein Verfahren der eingangs genannten Art, das dadurch gekennzeichnet ist, daß man das Schmieröl in Form eines Ölnebelstroms bei niedrigem Druck zuführt und in einem vor der Schmierstelle angeordneten, den Leitungsquerschnitt ausfüllenden porösen Speicherkörper sammelt bis der Speicherkörper zumindest teilweise mit dem Schmieröl gesättigt ist, daß man dann das Leitungssystem für einige Sekunden mit einem derart erhöhten Luftdruck beaufschlagt, daß sich der Speicherkörper ganz oder teilweise entleert und das ausgetriebene Schmieröl in Richtung auf die Schmierstelle mit hoher Geschwindigkeit gespritzt wird.

Durch das erfindungsgemäße Verfahren wird eine wirkungsvolle Ölschmierung für alle Arten von Schmierstellen, z.B. von Lagern, insbesondere schnellaufenden Lagern erreicht, ohne daß das Leitungssystem mit Druckluft eines hohen Druckes ständig beaufschlagt werden muß, um den Schmieröltröpfchen die erforderliche Energie zum Durchdringen der Sperrschicht mitzuteilen. Durch die unmittelbar vor dem Lager angeordnete Düse erhalten die Schmieröltröpfchen eine sehr hohe Geschwindigkeit, die ausreicht, um die Sperrschicht zu durchdringen, und bei der sich das Schmieröl auf dem Lager wirkungsvoll abscheidet, wenn die Öltröpfchen auf die Lagerflächen auftreffen. Dabei ist die Düse so dimensioniert, daß das Schmieröl nicht wieder zu einem "trockenen" Ölnebel versprüht, zu einem "trockenen" Ölnebel versprüht, sondern lediglich in einem mehr oder weniger zusammenhängenden Strahl auf die Schmierstelle gerichtet wird.

Die Ölschmierung erfolgt durch einen Druckluftstoß, der intervall- bzw. impulsartig erzeugt wird und durch den das in dem porösen Speicherkörper angesammelte Schmieröl aus diesem ausgetrieben und dann durch die Düse gespritzt wird. In dem Leitungssystem für die Ölschmierung wird üblicherweise ein Arbeitsdruck des Luftstromes von etwa 0,1 bar Uberdruck aufrechterhalten und der eingespeiste Ölnebel bei Geschwindigkeiten des Luftstromes zwischen 2 und 10 m/s und vorzugsweise von etwa 5 bis 7 m/s zu dem porösen Speicherkörper transportiert, wobei diese Phase der Ölanreicherung in dem Speicherkörper etwa 1 bis 5 min dauern kann. Bei den vorgenannten Drücken und Geschwindigkeiten setzen sich praktisch keine Schmieröltröpfchen an den Wandungen der Rohrleitungen ab.

Zu dem durch das Leitungssystem strömenden Luftstrom unter einem Druck von 0,1 bar Überdruck und einer Geschwindigkeit von etwa 2 bis 10 m/s wird bei diesem Druck und derselben Geschwindigkeit das Ölnebelgerät zugeschaltet, so daß der Luftstrom einen "trockenen" Ölnebel mitführt (d.h., der Ölnebel besteht aus so kleinen Tropfen, daß diese sich in den luftführenden Kanälen nicht niederschlagen. Erst in dem Speicherkörper wird das "Ausfällen" des Ölnebels bewirkt). Das Ölnebelgerät bleibt dabei so lange eingeschaltet, bis der poröse Speicherkörper zumindest teilweise mit Schmieröl gesättigt ist, d.h. Schmieröl abscheiden, aber noch aufnehmen kann.

Bevor der poröse Speicherkörper mit höher gespannter Druckluft beaufschlagt wird, um das Schmieröl aus ihm auszutreiben, wird die Leitung, vorzugsweise für kurze Zeit, mit ölfreier Luft gespült, die unter dem niedrigen Druck, insbesondere unter einem Druck von 0,1 bar Überdruck, steht. Hierbei wird das Ölnebelgerät, das im wesentlichen der Dosierung einer sehr geringen Schmierölmenge in der Zeiteinheit dient, ausgeschaltet.

Das Ausblasen des Schmieröls aus dem porösen Speicherkörper erfolgt intervallartig mit einem Druckluftstrom bei ca. 1 bis 10 bar, insbesondere etwa 6 bar Überdruck, wobei diese Bedingungen für etwa 1 bis 10 s, vorzugsweise 2 bis 6 s, aufrechterhalten werden. Während der Zuschaltung der hochgespannten Druckluft bleibt das Ölnebelgerät abgeschaltet.

Das aus dem porösen Speicherkörper ausgetriebene Schmieröl wird durch eine direkt hinter dem Speicherkörper angeordnete Düse geleitet, die auf die entsprechende Schmierstelle gerichtet ist. In der Düse wird der Schmieröl-Luftstrom auf eine hohe Geschwindigkeit beschleunigt, wobei die Öltropfen eine solche Größe und Energie besitzen, daß sie die Luftsperrschicht vor dem Lager durchdringen und in das Lager eindringen können.

Es sei hier der Vollständigkeit halber erwähnt, daß poröse Speicherkörper, beispielsweise aus Sintermetall, zum Abscheiden und Sammeln von Schmieröl aus einem Ölnebelstrom durch die GB—A—12 04 607 bekannt sind.

Einzelheiten der Erfindung werden anhand der schematischen Zeichnung näher erläutert.

Es zeigen:

Fig. 1 einen Schnitt durch ein Kugellager mit der erfindungsgemäßen Ölschmierung;

Fig. 2 das Lager gemäß Fig. 1 in einem vergrößerten Ausschnitt;

Fig. 3 das Fließschema für das Druckluftleitungssystem für die Ölschmierung.

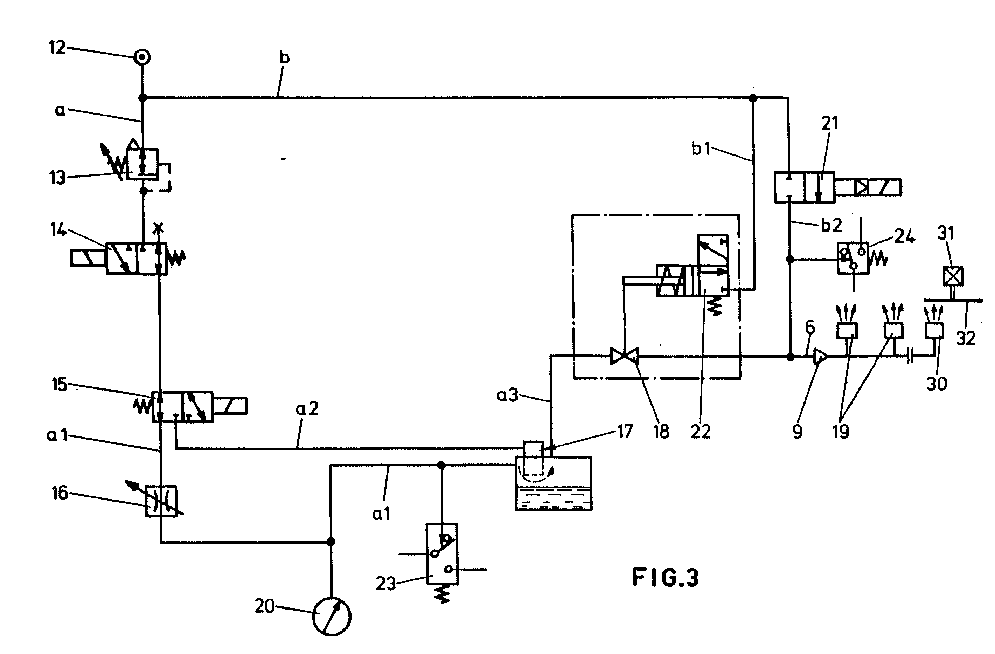

Der Außenläufer-Rotor 1 eines Elektromotors oder einer Treibwalze einer Spulmaschine ist über ein Wälzlager 3 auf der feststehenden Achse 2 gelagert. Der Innenring 4 des Lagers 3 ist im vorliegenden Fall fest mit der Achse 2 verbunden. Der Außenring 5 des Lagers 3 ist in dem Rotor 1 bzw. im Lagergehäuse 26 drehfest angeordnet und durch Druckring 27 und Sprengring 28 axial gehalten. Das Lager 3 steht mit einer Druckleitung 6 in Verbindung, in der unmittelbar vor dem Lager 3 ein poröser Speicherkörper 7 angeordnet ist. Die Druckleitung 6 ist an eine Druckluftquelle und ein Ölnebelgerät angeschlossen, wobei die Schaltung gemäß dem in Fig. 3 gezeigten Schaltplan ausgeführt ist.

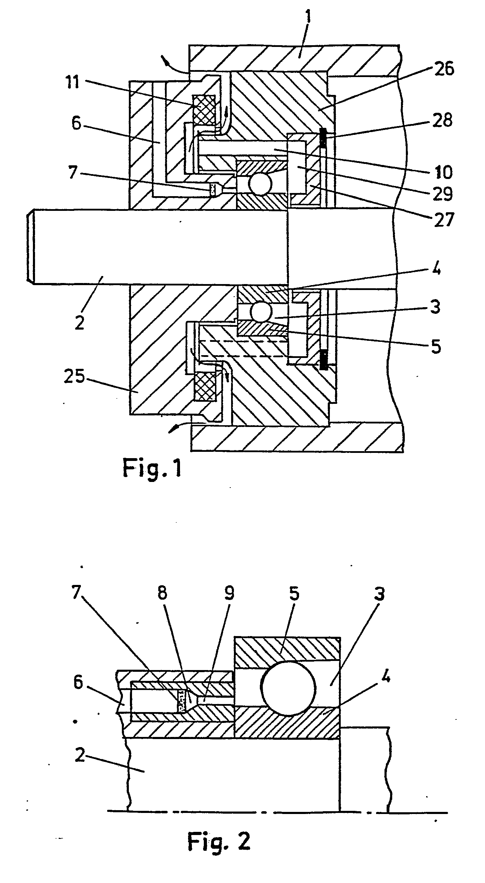

Der poröse Speicherkörper 7 besteht aus einem porösen Kunststoff oder einem Sintermetall oder einem ähnlichen Körper (z.B. Docht oder Filz), der in der Lage ist, das Schmieröl aus dem angelieferten Ölnebel abzuscheiden und zu speichern. Der poröse Speicherkörper 7 nimmt den gesamten Querschnitt der Druckleitung 6 ein. Hinter dem porösen Speicherkörper 7 ist eine trichterförmige Düse 8 (Fig. 2) angeordnet, deren Austrittsöffnung 9 auf das Lager 3 gerichtet ist.

Axial hinter dem Lager 3 und gegenüber der Düsenöffnung 9 ist eine Ausdrehung 29 vorgesehen, die in einen oder mehrere Auslaßkanäle 10 für den durch das Lager 3 geführten Luftstrom mündet. Am Auslaßende der Auslaßkanäle 10 im Lagergehäuse 26 ist ein Ring 11 aus einem saugfähigen Material, z.B. Filz, im ortsfesten Deckel 25 angeordnet, der das im wesentlichen tangential aus dem Lager 3 austretende überschüssige Schmieröl aufnimmt. Die durch das Lager 3 geführte Luftströmung verläßt das Rotorgehäuse 1 an den mit gebogenen Pfeilen gekennzeichneten Stellen.

Bei dem dargestellten Lager 3 wird ein hoher Öl-Abscheidungsgrad im Lager erreicht. An den Lagerstellen ist nur die unbedingt notwendige Ölmenge erforderlich. Überschüssiges Schmieröl wird durch die Auslaßkanäle 10 abgeführt und durch den im Deckel 25 befestigten Ring 11, der vorzugsweise aus einem absorptionsfähigen Kunststoff oder aus Filz besteht, aufgenommen. Der Filzring 11 ist so angeordnet, daß aus dem Lager 3 austretende Öltröpfchen, die vom Luftstrom mitgenommen und an der Wand des Auslaßkanals 10 ausgeschieden werden, infolge der Zentrifugalwirkung des umlaufenden Lagergehäuses 26 gegen die Innenfläche des Filzringes 11 geschleudert werden. Der Filzring kann entweder an einem rotierenden oder auch, wie gezeigt, an einem feststehenden Maschinenteil angeordnet sein. Es muß lediglich gewährleistet werden, daß der Weg der Öltröpfchen radial gegen den Filzring 11 gerichtet ist.

Die in Fig. 1 gezeigte Vorrichtung kann auch so aufgebaut sein, daß das Gehäuse 1 mit dem Außenring 5 des Lagers 3 und dem Lagergehäuse 26 feststeht und sich die Welle 2 mit dem Innenring 4 des Lagers 3 und dem Deckel 25 dreht.

Die zu den einzelnen Schmierstellen führenden Druckleitungen 6 haben vorzugsweise einen Innendurchmesser von 3 mm, und somit weist auch das in die Druckleitung 6 eingesetzte Filterplättchen bzw. der poröse Speicherkörper 7 einen Durchmesser von 3 mm auf. Die Dicke des Filterplättchens beträgt vorzugsweise 2 mm. Die Düse 8 hat einen Durchmesser von 1,5 mm an ihrer Austrittsöffnung. Die Speicherkapazität des Speicherkörpers 7 beträgt weniger als 1/100 g, so daß in der überwiegenden Zahl der Anwendungsfälle stündliche Schmierölausstöße genügen. Diese Dimensionierung ist nur ein Beispiel für die Ölschmierung des hier beschriebenen Lagers. Die Leitungsquerschnitte und der poröse Speicherkörper 7 können, entsprechend der Dimensionierung des Lagers 3, auch anders ausgelegt sein.

In der Fig. 3 ist das Schaltschema der Druckluftversorgung wiedergegeben. Von der Druckluftquelle 12 zweigen zwei Druckleitungen a und b ab. Die Leitung a führt zu dem Druckminderventil 13, von dem der Luftdruck von z.B. 6 bar Überdruck reduziert wird. An dem Ventil 14 (3/2-Wegeventil) in der Leitung a kann die Leitung gesperrt oder geöffnet werden. Mit dem Ventil 15 (3/2-Wegeventil) werden wahlweise die sogenannten Niederdruckleitungen a1 oder a2 geschaltet. Die Leitung a1 bringt unter Umgehung des Ölverneblers 17 im wesentlichen ölfreie Luft mit einem Druck von 0,1 bar Überdruck durch den Kugelhahn 18 direkt zu den Schmierstellen 19 bzw. den dort angeordneten Speicherkörpern. Durch eine einstellbare Drossel 16 in der Leitung a1 wird der Druck eingestellt, wobei dieser auf dem Manometer 20 ablesbar ist.

Die Leitung a2 führt vom Ventil 15 durch das Ölnebelgerät 17 und von dort über den Kugelhahn 18 zu den Schmierstellen 19.

Die Zuschaltung des Druckluftstoßes (z.B. 6 bar Überdruck) wird über das Ventil 21, das in die sogenannte Hochdruckleitung b eingeschaltet ist, vorgenommen. Beim Zuschalten des hohen Luftdrucks der Druckluftquelle 12 über Ventil 21 wird der Zweig b2 der Hochdruckleitung b zu den Schmierstellen geöffnet und dabei gleichzeitig über Zweig b1 und Ventil 22 der Kugelhahn 18 und damit die Niederdruckleitung a3 geschlossen, damit die hochgespannte Luft nicht in das Ölnebelgerät 17 zurückströmt. Die Betätigung der magnetbetätigten Ventile kann durch eine an sich bekannte, zeitgesteuerte Folgeschaltung erfolgen. Durch den Druckstoß wird das in dem Speicherkörper 7 angesammelte Schmieröl ausgetrieben und durch die Düse 9 ins Lager 3 gespritzt.

Mit 23 und 24 sind Druckfühler bezeichnet, welche bei Druckabfall in der Niederdruckleitung a mit den Zweigen a1, a2, a3 bzw. der Hochdruckleitung b mit den Zweigen b1 und b2 ein Ausgangssignal erzeugen, und zwar entweder ein Warnsignal oder ein Abschaltsignal für die zu schmierende Maschine.

Zur Überwachung der Funktion des Schmiersystems dient ferner die Referenzstelle 30, welcher anstelle einer Schmierstelle 19 das saugfähige, sich langsam drehende Zifferblatt 32 einer Uhr 31 gegenüberliegt. Das Zifferblatt erhält durch die Olejektionsstöße Markierungen, an denen über einen längeren Zeitraum hin die ordnungsgemäße Funktion des Schmiersystems überprüft werden kann.

Zur Versorgung von 50 Kugellagern einer Maschinenanlage mit Drehzahlen von mehr als 10.000 min$^{-1}$ wurde ein stündlicher Bedarf von 0,004 g Schmieröl pro Lagerstelle 19 ermittelt. Zur Bereitstellung dieser Schmierölmenge wurden das Ölnebelgerät 17 und die zugeführte Druckluft so eingestellt, daß ein Ölnebelstrom mit etwa 30 bis 40 Tropfen pro Minute zu den Speicherkörpern 7 der Lager während einer Speicherzeit von 2 Minuten geführt wurde. Sodann wurde der Ölvernebler 17 durch Umschalten des Ventils 15 abgeschaltet und für eine Dauer von 15 Minuten ölnebelfreie Luft durch die Druckluftleitungen a1, a3, 6 gespült. Sodann erfolgte für eine Zeitdauer von 4 Sekunden durch die Ventile 18, 22, 21 ein Umschalten auf einen Druck von 6 bar, wodurch das in den Speicherkörpern 7 gespeicherte Schmieröl ausgetrieben und in die Kugellager gespritzt wurde. Sodann wurde das Druckluftsystem für eine Stunde gänzlich abgeschaltet. Durch Dauerversuche stellte sich heraus, daß hierbei eine ausreichende Schmierung erzielbar war, ohne daß Schmieröl in vernebelter oder flüssiger Form aus dem Lagern austrat und zu einer Umweltbelastung führte. Als günstig stellte sich ferner heraus, daß vor dem Speichern des Schmieröls in den Speicherkörpern 7 über Niederdruckleitung a2 durch Abscheidung aus dem Ölnebel und/oder der Ölejektion über Hochdruckleitung b2 ein Spülen der Lagerstellen 19 mit ölnebelfreier Luft über die Niederdruckleitung a1 für z.B. 15 Minuten erfolgte. Hierdurch kann eine Reinigung der Lager erzielt und damit die Lebensdauer der Lager verlängert werden.

Es sei bemerkt, daß es sich bei dem Ölnebelgerät 17 um ein handelsübliches Gerät handelt, bei dem der Öleinfüllstutzen zum Anschluß der Leitung a1 benutzt wurde. Hierdurch kann der eigentliche, nach dem Vergaserprinzip arbeitende Ölvernebler 17 umgangen werden, so daß das Ölnebelgerät 17 von einem Luftstrom durchströmt wird, ohne daß gleichzeitig ein Ölnebel entsteht.

## Patentansprüche

1. Verfahren zur intermittierenden Versorgung von Schmierstellen (3, 19, 30) mit Schmieröl, bei dem das Schmieröl in den Bereich vor die Schmierstelle (3, 19, 30) geführt und mit hoher Geschwindigkeit von einem Luftstrom auf die Schmierstelle gespritzt wird, dadurch gekennzeichnet, daß man das Schmieröl in Form eines Ölnebelstroms bei niedrigem Druck zuführt und in einem vor der Schmierstelle (3, 19, 30) angeordneten, den Leitungsquerschnitt auffüllenden porösen Speicherkörper (7) sammelt bis der Speicherkörper (7) zumindest teilweise mit dem Schmieröl gesättigt ist, daß man dann das Leitungssystem für einige Sekunden mit einem derart erhöhten Luftdruck beaufschlagt, daß sich der Speicherkörper (7) ganz oder teilweise entleert und das ausgetriebene Schmieröl in Richtung auf die Schmierstelle (3, 19, 30) mit hoher Geschwindigkeit gespritzt wird.

2. Verfahren nach Anspruch 1, dadurch gekennzeichnet, daß der Ölnebel in einem Luftstrom mit einem Überdruck von 100 mbar bis 500 mbar, insebesondere etwa 100 mbar Überdruck, zu dem porösen Speicherkörper (7) transportiert wird, vorzugsweise mit einer Dauer von 1 bis 5 min und mit einer Strömungsgeschwindigkeit von etwa 2 bis 10 m/s.

3. Verfahren nach den Ansprüchen 1 und 2, dadurch gekennzeichnet, daß man das Leitungssystem (a1, a3) mit einem ölfreien Luftstrom geringen Drucks, insbesondere von etwa 100 mbar Überdruck beaufschlagt, bevor das Schmieröl aus dem porösen Speicherkörper (7) ausgetrieben wird, um im wesentlichen alle Schmierölteilchen aus dem Leitungssystem (a1, a3) zu entfernen.

4. Verfahren nach den Ansprüchen 1 bis 3, dadurch gekennzeichnet, daß man das Austreiben des Schmieröls aus dem porösen Speicherkörper (7) impulsartig vornimmt, und zwar vorzugsweise mit einem Druckluftstrom von ca. 1 bis 10, insbesondere 6 bar Überdruck, während einer Impulsdauer von ca. 1 bis 10, vorzugsweise 2 bis 6 s.

5. Verfahren nach Anspruch 4, dadurch gekennzeichnet, daß man den das Schmieröl aus dem porösen Speicherkörper (7) treibenden Druckluftstrom durch Verengung des Strömungsquerschnitts hinter dem Speicherkörper (7) beschleunigt und auf die Schmierstelle (3, 19, 30) richtet.

6. Verfahren nach mindestens einem der Ansprüche 1 bis 5, dadurch gekennzeichnet, daß während der Zuschaltung des Druckluftstoßes die Ölnebelzuführung abgeschaltet ist.

7. Vorrichtung zur intermittierenden Versorgung von Schmierstellen (3, 19, 30) mit Schmieröl unter Durchführung des Verfahrens nach den Ansprüchen 1 bis 6, welche eine Zuführleitung (a3, 6) für das Schmieröl und eine Zuführleitung (a, b) für Druckluft aufweist, die vor der Schmierstelle (3, 19, 30) vereinigt und im Bereich der Schmierstelle (3, 19, 30) auf die Schmierstelle hin gerichtet wind, sowie einer Ventilanordnung (14, 15, 21, 22) zur Steuerung der Schmierölzufuhr, dadurch gekennzeichnet, daß hinter der Vereinigungsstelle der Zuführleitungen (a3, b2) und unmittelbar vor der Schmierstelle (Lager 3) ein poröser Speicherkörper (7), der wenigstens den Querschnitt der Zuführleitung (6) ausfüllt, angeordnet ist und daß die Zuführleitung (6) über eine zeitgesteuerte Folgesteuerung wechselweise über eine Niederdruckleitung (a2, a3), mit vorzugsweise 0,1 bis 0,5 bar Überdruck an ein Ölnebelgerät (17) und an eine Hochdruckleitung (b, b2) mit mehr als 1 bar Überdruck an eine Druckluftquelle (12) anschließbar ist.

8. Vorrichtung nach Anspruch 7, dadurch gekennzeichnet, daß in der Druckluftleitung (6) hinter dem porösen Speicherkörper (7) und unmittelbar vor der Schmierstelle (Lager 3) eine tricherförmige Verengung des Leitungsquerschnitts (Düse 8) angeordnet ist.

9. Vorrichtung nach den Ansprüchen 7 und 8, dadurch gekennzeichnet, daß der poröse Speicherkörper (7) aus einem porösen Kunststoff, einem Sintermetall, aus Filz oder einem Docht besteht.

10. Vorrichtung nach den Ansprüchen 7 bis 9, dadurch gekennzeichnet, daß in dem Auslaßkanal (10) hinter der Schmierstelle (Lager 3) ein Ring (11) aus einem saugfähigen Werkstoff (z.B. Filz, Docht) angeordnet ist, der das aus der Schmierstelle (Lager 3) austretende, überschüssige Schmieröl aufnimmt, und zwar vorzugsweise derart, daß das Schmieröl durch Zentrifugalkräfte in den stationär angeordneten Ring (11) aus saugfähigem Werkstoff getrieben wird.

11. Vorrichtung nach einem der Ansprüche 7 bis 10, dadurch gekennzeichnet, daß eine Uhr (31) mit einem rotierenden, saugfähigen Zifferblatt (32) vor einem Auslaß (Referenzstelle 30) der Zuführleitung (6) angeordnet ist.

**Revendications**

1. Procédé pour l'alimentation intermittente en huile de points de lubrification (3, 19, 30), dans lequel on amène l'huile dans la zone située en amont du point de lubrification (3, 19 et 30), puis on la projette à grande vitesse sur ce dernier au moyen d'un flux d'air, caractérisé par le fait qu'on amène l'huile de lubrification sous la forme d'un flux de vapeur d'huile à basse pression, qu'on l'emmagasine dans un élément accumulateur poreux (7) installé en amont du point de lubrification (3, 19, 30) en remplissant complètement la section transversale de la conduite, et ce, jusqu'à ce que l'élément accumulateur (7) soit au moins en partie saturé d'huile de lubrification, que l'on soumet ensuite le système de conduites pendant quelques secondes à une pression d'air suffisamment élevée pour que l'élément accumulateur (7) se vide entièrement ou partiellement et que l'huile expulsée soit projetée à grande vitesse en direction du point de lubrification (3, 19, 30).

2. Procédé selon la revendication 1, caractérisé par le fait que la vapeur d'huile est amenée à l'élément accumulateur poreux (7) dans un flux d'air ayant une pression effective de 100 à 500 mbar, en particulier d'environ 100 mbar et ce, de préférence pendant une durée de 1 à 5 min et une vitesse d'écoulement d'environ 2 à 10 m/s.

3. Procédé selon les revendications 1 et 2, caractérisé par le fait que l'on soumet le système de conduites (a1, a3) à un flux d'air exempt d'huile de faible pression, en particulier d'environ 100 mbar eff. avant d'expulser l'huile de lubrification de l'élément accumulateur poreux (7) afin d'éliminer toutes les particules d'huile de lubrification du système de conduites (a1, a3).

4. Procédé selon les revendications 1 à 3, caractérisé par le fait que l'on effectue l'expulsion de l'huile de lubrification de l'élément accumulateur poreux (7) sous forme d'impulsions, et ce, de préférence avec un flux d'air comprimé d'environ 1 à 10, en particulier 6 bars eff. et pendant une durée d'impulsion d'environ 1 à 10, de préférence 2 à 6 s.

5. Procédé selon la revendication 4, caractérisé par le fait que par un rétrécissement de la section transversale d'écoulement derrière l'élément accumulateur (7) on accélère le flux d'air comprimé expulsant l'huile de lubrification de l'élément accumulateur poreux (7) et on le dirige sur le point de lubrification (3, 19, 30).

6. Procédé selon au moins l'une des revendications 1 à 5, caractérisé par le fait que l'amenée de la vapeur d'huile est coupée pendant l'enclenchement du jet d'air comprimé.

7. Dispositif pour l'alimentation intermittente en huile de points de lubrification (3, 19, 30) pour la mise en oeuvre du procédé selon les revendications 1 à 6, dispositif qui comporte une conduite d'amenée (a3, 6) pour l'huile de lubrification et une conduite d'amenée (a, b) pour l'air comprimé, ces conduites se réunissant en amont des points de lubrification (3, 19, 30) et, dans la zone de ces points de lubrification (3, 19, 30) étant dirigées vers ces derniers, ainsi qu'un système de valves (14, 15, 21, 22) pour la commande de l'amenée d'huile de lubrification, caractérisé par le fait que derrière le point de réunification des conduites d'amenée (a3, b2) et juste devant le point de lubrification (roulement 3), est disposé un élément accumulateur poreux (7) qui remplit au moins la section transversale de la conduite d'amenée (6) et que cette conduite d'amenée (6) par l'intermédiaire d'un dispositif de commande automatique séquentiel synchronisé peut alternativement être raccordée par une conduite basse pression (a2, a3), de préférence de 0,1 à 0,5 bar eff. à un appareil pulvérisateur d'huile (17) et, par une conduite haute pression (b, b2) de plus de 1 bar eff., à une source d'air comprimé (12).

8. Dispositif selon la revendication 7, caractérisé par le fait qu'un rétrécissement en forme d'entonnoir de la section transversale de la conduite (buse 8) est prévu dans la conduite d'air comprimé (6) derrière l'élément accumulateur poreux (7) et immédiatement devant le point de lubrification (roulement 3).

9. Dispositif selon les revendications 7 et 8, caractérisé par le fait que l'élément accumulateur poreux (7) est constitué par une matière plastique poreuse, un métal fritté, un feutre ou une mèche.

10. Dispositif selon les revendications 7 à 9, caractérisé par le fait que dans le canal d'évacuation (10) derrière le point de lubrification (roulement 3) est installée une bague (11) en matériau absorbant (par exemple feutre, mèche) qui absorbe l'huile de lubrification excédentaire s'échappant du point de lubrification (roulement 3), et ce, en ce sens que l'huile de lubrification est chassée par la force centrifuge dans la bague fixe (11) en matériau absorbant.

11. Dispositif selon l'une des revendications 7 à 10, caractérisé par le fait qu'une horloge (31) comportant un cadran absorbant rotatif (32) est placée devant une ouverture (point de référence 30) de la conduite d'amenée (6).

## Claims

1. A method of intermittently providing lubricating oil to lubrication points (3, 19, 30) according to which the lubricating oil is supplied to the area in front of the lubrication point (3, 19, 30) and sprayed by means of an air stream at a high speed onto the lubrication point, characterized by the fact that the lubricating oil is supplied in the form of an oil mist stream under a lower pressure and accumulated in a porous storage means (7) positioned in front of the lubrication point (3, 19, 30) to fully occupy the cross section of the supply line, until said storage means (7) is at least partially saturated with said lubricating oil, that the supply lines then are impinged for a few seconds by an increased air pressure, so that the storage means (7) is completely or partially drained and the discharged lubricating oil is sprayed at a high speed in the direction of the lubrication point (9, 19, 30).

2. Method according to claim 1, characterized by the fact that the oil mist is supplied to the porous storage means (7) in an air stream under an excess pressure of 100 mbar (millibar) to 500 mbar, particularly under an excess pressure of about 100 mbar, and preferably during a period of 1 to 5 min and at a speed of about 2 to 10 m/sec.

3. Method according to claims 1 and 2, characterized by the fact that the supply lines (a1, a3) are impinged by an oil-free air stream being under a low pressure, particularly under an excess pressure of about 100 mbar, before the lubricating oil is forced out of the porous storage means (7), in order to essentially remove all lubricating oil droplets from the supply lines (a1, a3).

4. Method according to claims 1 to 3, characterized by the fact that the lubricating oil is forced out of the porous storage means (7) in impulses, i.e. preferably by means of a compressed-air stream under an excess pressure of about 1 to 10 bar, particularly 6 bar, during an impulse period of about 1 to 10 sec, preferably 2 to 6 sec.

5. Method according to claim 4, characterized by the fact that the compressed-air stream forcing the lubricating oil out of the porous storage means (7) is accelerated by narrowing the cross section of the supply line behind the storage means (7), and directed onto the lubricating point (3, 19, 30).

6. Method according to at least one of the claims 1 to 5, characterized by the fact that the oil mist supply is disconnected, as long as compressed air is applied.

7. An apparatus for intermittently providing lubricating oil to lubrication points (3, 19, 30) by applying the method according to claims 1 to 6, which apparatus comprises a supply line (a3, 6) for the lubricating oil and a supply line (a, b) for the compressed air, which supply lines are connected with each other in front of the lubrication point (3, 19, 30) and in the area of said lubrication point directed towards said lubrication point (3, 19, 30), and which apparatus further comprises valve means (14, 15, 21, 22) for controlling the supply of lubricating oil, characterized by the fact that a porous storage means (7) is positioned behind the connection point of the supply lines (a3, b2) and immediately in front of the lubrication point (bearing 3), so as to fully occupy at least the cross section of the supply line (6), and that the supply line (6) can be connected by means of a time-controlled follow-up control means alternately to an oil mist generating device (17) through a low pressure line (a2, a3) being under an excess pressure of preferably 0.1 to 0.5 bar, and to a compressed-air source (12) through a high pressure line (b, b2) being under an excess pressure of more than 1 bar.

8. An apparatus according to claim 7, characterized by the fact that a funnel-shaped constriction (nozzle 8) of the cross section of the supply line (6) is provided behind the porous storage means (7) and immediately in front of the lubrication point (bearing 3).

9. An apparatus according to claims 7 and 8, characterized by the fact that the porous storage means (7) consists of a porous plastic, a sintered metal, a felt, or a wick.

10. An apparatus according to the claims 7 to 9, characterized by the fact that a ring (11) made of an absorbent material (e.g. a felt, a wick) is arranged in the exhaust duct (10) behind the lubrication point (bearing 3), which ring (11) absorbs the excess lubricating oil emerging from the lubrication point (bearing 3), which is achieved preferably by the fact that the lubricating oil is forced by centrifugal forces into the stationary ring (11) made of an absorbant material.

11. An apparatus according to any one of the claims 7 to 10, characterized by the fact that a clock (31) having a rotating, absorbent dial (32) is arranged in front of an exit (reference point 30) of the supply line (6).

Fig. 1

Fig. 2

FIG.3

0 026 488